(19) **Europäisches Patentamt / European Patent Office / Office européen des brevets**

(11) **EP 2 028 704 A1**

(12) **EUROPEAN PATENT APPLICATION**

(43) Date of publication:
**25.02.2009 Bulletin 2009/09**

(51) Int Cl.:
*H01M 4/52* [(2006.01)]    *H01M 4/62* [(2006.01)]
*H01M 4/66* [(2006.01)]    *H01M 10/40* [(2006.01)]

(21) Application number: **08252331.7**

(22) Date of filing: **08.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.07.2007 JP 2007182592**

(71) Applicant: **TODA KOGYO CORPORATION**
**Hiroshima-shi,**
**Hiroshima-ken (JP)**

(72) Inventors:
• **Iwasaki, Keisuke**
  **Otake-shi**
  **Hiroshima-ken (JP)**
• **Hayashi, Kazuyuki**
  **Otake-shi**
  **Hiroshima-ken (JP)**

(74) Representative: **Woods, Geoffrey Corlett**
**J.A. KEMP & CO.**
**14 South Square**
**Gray's Inn**
**London**
**WC1R 5JJ (GB)**

(54) **Process for producing composite cathode active material for non-aqueous electrolyte secondary cell**

(57)    The present invention relates to a process for producing a composite cathode active material for a non-aqueous electrolyte secondary cell which is subjected to surface treatment, comprising:
previously mixing the cathode active material with a surface-treating component in the form of a metal compound containing one or more metal elements selected from the group consisting of the first transition series elements and the second transition series elements; and
then coating the cathode active material with the surface-treating component using an apparatus capable of effecting a high-speed shearing action.

Fig. 1

**EP 2 028 704 A1**

**Description**

BACKGROUND OF THE INVENTION

The present invention relates to a process for producing a composite cathode active material for a non-aqueous electrolyte secondary cell which is capable of maintaining an initial discharge capacity required for a secondary cell, and showing improved charge/discharge cycle characteristics under high temperature conditions.

With the recent rapid development of portable and cordless electronic devices such as audio-visual (AV) devices and personal computers, it has been increasingly demanded to use as a power source thereof, secondary cell or battery having a small size, a light weight and a high energy density. Also, in consideration of global environments, electric cars and hybrid cars have been recently developed and put into practice, so that there is an increasing demand for a lithium ion secondary cell for large size applications having excellent storage characteristics. Under these circumstances, there have been noticed a lithium ion secondary cell having advantages such as high charge/discharge capacities and good storage characteristics.

Hitherto, as cathode active materials useful for a high energy-type lithium secondary cell exhibiting a 4 V-grade voltage, there are generally known $LiMn_2O_4$ having a spinel structure, $LiMnO_2$ having a zigzag layer structure, $LiCoO_2$ having a layer rock-salt structure, $LiNiO_2$ or the like.

These materials have been, however, required to be further improved in properties thereof in order to enhance a thermal stability upon charging and a durability upon subjected to charge/discharge cycles.

Conventionally, the $LiNiO_2$ particles have been variously improved in order to stabilize a crystal structure thereof and enhance various characteristics thereof such as charge/discharge cycle characteristics. For example, there are known the technique for improving charge/discharge cycle characteristics of lithium secondary cell having a cathode containing a lithium-transition metal composite oxide as an active material in which a coating film made of BeO, MgO, CaO, SrO, BaO, ZnO, $Al_2O_3$, CeO, $As_2O_3$ or a mixture of any two or more thereof is formed on the surface of the cathode (Japanese Patent Application Laid-Open No. 8-236114 (1996)), the technique for improving a thermal stability of a cathode active material by coating a outer peripheral surface of the active material with at least one metal selected from the group consisting of Ti, A1, Sn, Bi, Cu, Si, Ge, W, Zr, B and Mo, and/or an intermetallic compound composed of combination of a plurality of these metals, and/or an oxide of these metals (Japanese Patent Application Laid-Open No. 11-16566 (1999)), the technique for improving load characteristics, cycle characteristics and safety of lithium secondary cell by dry-blending lithium cobaltate or a composite oxide obtained by replacing a part of cobalt of lithium cobaltate with a specific amount of a specific metal element, with an oxide of at least one metal selected from the group consisting of Mg, Ti and Zr, and then heat-treating the resultant dry blend in a specific temperature range (Japanese Patent Application Laid-Open No. 2003-221234), or the like.

At present, it has been required to provide a cathode active material for a non-aqueous electrolyte secondary cell having excellent properties. However, there have been conventionally provided no processes for producing such a cathode active material capable of fully satisfying various these properties, in a simplified manner.

SUMMARY OF THE INVENTION

An object of the present invention is to provide a process for producing a composite cathode active material for a non-aqueous electrolyte secondary cell having excellent properties.

The above object can be achieved by the following aspects of the present invention.

That is, in a first aspect of the present invention, there is provided a process for producing a composite cathode active material for a non-aqueous electrolyte secondary cell which is subjected to surface treatment, comprising:

previously mixing the cathode active material with a surface-treating component in the form of a metal compound containing one or more metal elements selected from the group consisting of the first transition series elements and the second transition series elements; and
then coating the cathode active material with the surface-treating component using an apparatus capable of effecting a high-speed shearing action (Invention 1).

In a second aspect of the present invention, there is provided the process according to the above first aspect, wherein the cathode active material is at least one material selected from the group consisting of lithium-transition metal composite oxides (Invention 2).

In a third aspect of the present invention, there is provided the process according to the above aspect 1 or 2, wherein the surface-treating component is an oxide or a hydroxide of one or more metal elements selected from the group consisting of the first transition series elements and the second transition series elements (Invention 3).

In a fourth aspect of the present invention, there is provided a composite cathode active material for a non-aqueous electrolyte secondary cell which is produced by the process as defined in any one of the above aspects 1 to 3 (Invention 4).

In a fifth aspect of the present invention, there is provided a non-aqueous electrolyte secondary cell having a cathode comprising the composite cathode active material for a non-aqueous electrolyte secondary cell as defined in the above aspect 4 (Invention 5).

BRIEF DESCRIPTION OF THE DRAWINGS

Fig. 1 is an electron micrograph showing a composite cathode active material obtained in Example 1.
Fig. 2 is an electron micrograph showing a composite cathode active material obtained in Example 1 (magnified Fig. 1).
Fig. 3 is an electron micrograph showing a composite cathode active material obtained in Comparative Example 1.

DETAILED DESCRIPTION OF THE INVENTION

The present invention will be described in detail below.

First, the process for producing a composite cathode active material for a non-aqueous electrolyte secondary cell according to the present invention is described.

The composite cathode active material for a non-aqueous electrolyte secondary cell according to the present invention is obtained by previously mixing the cathode active material with a surface-treating component using an apparatus capable of applying a shearing force and spatula stroking, and then treating the resultant mixture using an apparatus capable of effecting a high-speed shearing action.

The cathode active material used as core particles of the composite cathode active material according to the present invention is not particularly limited, and may be usually selected from those cathode active materials ordinarily employed for a non-aqueous electrolyte secondary cell. Examples of the cathode active material may include lithium-transition metal composite oxides such as lithium cobaltate, lithium manganate and lithium nickelate. In addition, as the cathode active material, there may also be used those composite oxides formed by replacing the transition metal of the lithium-transition metal composite oxides with other metal elements such as Mg, Al, Ti, Mn, Ni, Co, Zr and Sn, and as such composite oxides there are exemplified Li-Ni-Co-Mn-O based lithium-transition metal composite oxides and Li-Ni-Co-Al-O based lithium-transition metal composite oxides.

The core particles may have various shapes, and may be in the form of granular particles having a spherical shape, a granular shape, an octahedral shape, a hexahedral shape or a polyhedral shape, acicular particles having an acicular shape, a spindle-like shape or a rice grain-like shape, plate-shaped particles, or amorphous-shaped particles. The shape of the core particles may be selected depending upon applications thereof and is not particularly limited.

The core particles used in the present invention have an average particle diameter of preferably 1.0 to 30 $\mu$m, more preferably 1.5 to 20 $\mu$m and a BET specific surface area value of preferably 0.05 to 10 m$^2$/g, more preferably 0.08 to 8 m$^2$/g. When the average particle diameter of the core particles is less than 1.0 $\mu$m or the BET specific surface area value thereof is more than 10 m$^2$/g, the core particles tend to be undesirably deteriorated in packing density, or show an increased reactivity with an electrolyte. When the average particle diameter of the core particles is more than 30 $\mu$m or the BET specific surface area value thereof is less than 0.05 m$^2$/g, it may be difficult to industrially produce the core particles.

The surface-treating component used in the present invention is usually in the form of a metal compound containing the first transition series element or the second transition series element, such as an oxide or a hydroxide of these metals.

Specific examples of the surface-treating component usable in the present invention may include oxides or hydroxides of titanium, zirconium, manganese, cobalt, nickel, etc., as well as composite oxides of these elements with other metal elements.

The surface-treating component preferably has an average particle diameter of preferably 0.01 to 5.0 $\mu$m more preferably 0.02 to 3.0 $\mu$m and a BET specific surface area value of preferably 0.5 to 100 m$^2$/g more preferably 1.0 to 60 m$^2$/g. When the average particle diameter of the surface-treating component is less than 0.01 $\mu$m, it may be difficult to industrially produce the surface-treating component.
When the average particle diameter of the surface-treating component is more than 5.0 $\mu$m, it may be difficult to treat the cathode active material with the surface-treating component.

The amount of the surface-treating component added is preferably 0.1 to 50 parts by weight, more preferably 0.1 to 30 parts by weight and still more preferably 0.3 to 20 parts by weight on the basis of 100 parts by weight of the cathode active material as the core particles.

The coating of the surface-treating component on the surface of the cathode active material may be conducted by mechanically mixing and stirring the cathode active material and the surface-treating component with each other using an apparatus capable of effecting spatula stroking and an apparatus capable of effecting a high-speed shearing treatment. A substantially whole amount of the surface-treating component added is coated on the surface of the respective particles of the cathode active material.

In order to uniformly coat the surface of the respective particles of the cathode active material with the surface-treating component, the cathode active material is preferably previously deaggregated using a crusher or pulverizer.

The mixing of the cathode active material with the surface-treating component is preferably carried out using an apparatus capable of applying a shear force to a mixture thereof in the form of a powder layer, in particular, such an apparatus capable of simultaneously effecting a shearing action, spatula stroking and compression. Examples of such an apparatus may include wheel-type kneaders, ball-type kneaders, blade-type kneaders and roll-type kneaders. Among these apparatuses, the wheel-type kneaders are more effectively usable upon practicing the present invention.

Specific examples of the wheel-type kneaders may include edge runners (similar in meaning to "mix muller", "Simpson mill" and "sand mill"), multimill, Stotz mill, Wet pan mill, corner mill, ring muller or the like. Among these wheel-type kneaders, preferred are edge runners, multimill, Stotz mill, Wet pan mill and ring muller, and more preferred are edge runners. Specific examples of the ball-type kneaders may include vibration mill or the like. Specific examples of the blade-type kneaders may include Henschel mixer, planetary mixer, Nauter mixer or the like. Specific examples of the roll-type kneaders may include extruders or the like.

The conditions for mixing the cathode active material with the surface-treating component may be selected so as to uniformly coat the surface of the respective particles of the cathode active material as core particles with the surface-treating component. For example, the mixing conditions when using lithium cobaltate as the cathode active material may be appropriately controlled such that the linear load is 19.6 to 1960 N/cm (2 to 200 kg/cm), preferably 98 to 1470 N/cm (10 to 150 kg/cm) and more preferably 147 to 980 N/cm (15 to 100 kg/cm); the treating time is 5 to 120 min and preferably 10 to 90 min. Meanwhile, the stirring speed may be appropriately controlled within the range of 2 to 2000 rpm, preferably 5 to 1000 rpm and more preferably 10 to 800 rpm.

Examples of the apparatus capable of applying a shear force to the powder layer at a high speed which are usable in the present invention may include high-speed shearing mills, blade-type kneaders and planetary mills. Among these apparatuses, preferred are high-speed shearing mills. Specific examples of the high-speed shearing mills may include Hybridizer and Nobilta produced by Hosokawa Micron Co., Ltd.

The stirring speed of the apparatus capable of applying a shear force is typically higher than the stirring speed employed in the previous mixing step. The stirring speed may thus be appropriately controlled within the range of 100 to 100000 rpm, preferably 1000 to 50000 rpm and more preferably from 2100 to 30000 rpm. The treating time may be appropriately controlled within the range of 1 to 180 min and preferably 2 to 120 min.

During the mixing treatment or after completion of the mixing treatment, the heating and drying treatment may also be conducted. The heating temperature may be appropriately controlled within the range of 50 to 200°C.

The composite cathode active material for a non-aqueous electrolyte secondary cell according to the present invention preferably has an average particle diameter of preferably 1.0 to 30 $\mu$m, more preferably 1.5 to 25 $\mu$m. It may be difficult to industrially produce such a composite cathode active material having an average particle diameter of more than 30 $\mu$m.

The composite cathode active material for a non-aqueous electrolyte secondary cell according to the present invention preferably has a BET specific surface area value of preferably 0.05 to 10 m$^2$/g, more preferably 0.08 to 7.0 m$^2$/g. It may be difficult to industrially produce such a composite cathode active material having a BET specific surface area value of less than 0.05 m$^2$/g. When the BET specific surface area value is more than 10 m$^2$/g, the resultant composite cathode active material tends to be deteriorated in packing density and exhibit an undesirably increased reactivity with an electrolyte.

In the composite cathode active material for a non-aqueous electrolyte secondary cell according to the present invention, the coating amount of the surface-treating component is preferably 0.1 to 50% by weight, more preferably 0.2 to 30% by weight, especially preferably 0.3 to 20% by weight. When the coating amount of the surface-treating component is less than 0.1% by weight, the effect of improving a retention efficiency of charge/discharge cycle capacity of the obtained cell under high temperature conditions tends to be insufficient. When the coating amount of the surface-treating component is more than 50% by weight, the resultant cell tend to be considerably deteriorated in initial discharge capacity.

When the composite cathode active material for a non-aqueous electrolyte secondary cell which is produced according to the process of the present invention is used to produce a cathode, the composite cathode active material may be mechanically dispersed in an electrolyte solution such as carbonates and ethers. In this case, it is preferred that the surface-treating component is not desorbed from the surface of the composite cathode active material. Therefore, the desorption percentage of the surface-treating component from the composite cathode active material for a non-aqueous electrolyte secondary cell according to the present invention is preferably not more than 10% as measured by the method described in the below-mentioned Examples. When the desorption percentage of the surface-treating component is more than 10%, the resultant cell tend to be considerably deteriorated in charge/discharge cycle characteristics under high temperature conditions, or in storage stability under high temperature conditions when preserved in a charged state. The desorption percentage of the surface-treating component is more preferably not more than 8% and still more preferably not more than 5%.

The composite cathode active material for a non-aqueous electrolyte secondary cell according to the present invention is in the form of particles having a substantially smooth surface on which substantially no small particles are present.

The number of the small particles being present on the surface of the respective core particles of the composite cathode active material for a non-aqueous electrolyte secondary cell according to the present invention is preferably not more than 5 as measured by the method described in the below-mentioned Examples. When the number of the small particles being present on the surface of the respective core particles is more than 5, the obtained composite cathode active material tends to be deteriorated in uniformity of the surface-treated condition thereof, so that the resultant cell tend to be considerably deteriorated in charge/discharge cycle characteristics under high temperature conditions, or in storage stability under high temperature conditions when preserved in a charged state. The number of the small particles being present on the surface of the respective core particles is more preferably not more than 3.

Next, the cathode produced from the composite cathode active material for a non-aqueous electrolyte secondary cell according to the present invention is described.

When producing the cathode from the composite cathode active material according to the present invention, a conductive agent and a binder are added to and mixed with the composite cathode active material by ordinary methods. Examples of the preferred conductive agent may include acetylene black, carbon black, graphite, etc. Examples of the preferred binder may include polytetrafluoroethylene, polyvinylidene fluoride, etc.

The secondary cell produced by using the cathode active material of the present invention is constructed from the cathode, an anode and an electrolyte.

Examples of an anode active material used for the anode may include metallic lithium, lithium/aluminum alloys, lithium/tin alloys, graphite, etc.

Examples of a solvent used in the electrolyte solution may include combination of ethylene carbonate and diethyl carbonate as well as organic solvents containing at least one compound selected from the group consisting of carbonates such as propylene carbonate and dimethyl carbonate, and ethers such as dimethoxy ethane.

Further, as the electrolyte, there may be used lithium phosphate hexafluoride as well as lithium salts such as lithium perchlorate and lithium borate tetrafluoride. These electrolytes may be used in the form of a solution prepared by dissolving at least one thereof in the above solvent.

<u><Effect and function></u>

The important point of the present invention resides in such a fact that when previously treating the cathode active material and the surface-treating component using an apparatus capable of effecting a shearing action and spatula stroking and then treating the resultant mixture using an apparatus capable of effecting a high-speed shearing action, the surface-treating component is more uniformly treated on the cathode active material and hardly desorbed from the surface of the respective particles of the cathode active material, thereby fully suppressing interfacial reaction between the electrolyte solution and the cathode active material.

The reason why the composite cathode active material for a non-aqueous electrolyte secondary cell which is produced according to the process of the present invention can exhibit excellent properties is considered by the present inventors as follows. That is, even when the core particles are agglomerated together, the agglomerated particles can be well deaggregated by applying a shear force and spatula stroking to the powder layer, and further the surface-treating component can be uniformly coated onto the surface of the respective core particles by treating the particles using the apparatus capable of effecting a high-speed shearing action.

As a result, the composite cathode active material for a non-aqueous electrolyte secondary cell which is produced according to the process of the present invention can be kept in the form of particles having a smooth surface on which substantially no small particles are present and, therefore, can exhibit a uniform surface condition. For this reason, the surface of the respective particles of the composite cathode active material is free from portions where a reactivity is locally increased, i.e., has no portions which tend to suffer from swelling owing to decomposition of the electrolyte solution or generation of gases.

In the process for producing the composite cathode active material for a non-aqueous electrolyte secondary cell according to the present invention, all of the steps thereof can be carried out under dried conditions without need of treatments in an organic solvent, and the cathode active material having higher characteristics can be produced even for a short period of time. Therefore, the process of the present invention is excellent from the industrial viewpoints.

In accordance with the process for producing the composite cathode active material for a non-aqueous electrolyte secondary cell according to the present invention, the resultant composite cathode active material can maintain an initial discharge capacity required for a secondary cell, and the non-aqueous electrolyte secondary cell produced by using the composite cathode active material can be improved in high-temperature characteristics. Therefore, the process of the present invention is suitable as a process for producing a cathode active material for a non-aqueous electrolyte secondary cell.

## EXAMPLES

The present invention is described in more detail below by Examples and Comparative Examples.

The average particle diameters of the core particles and the composite cathode active material for a non-aqueous electrolyte secondary cell were expressed by an average value of diameters of about 350 particles which were measured in predetermined directions from an enlarged photograph obtained by magnifying an electron micrograph (x 1000) four times in each of the longitudinal and lateral directions.

The specific surface area value was expressed by the value measured by BET method.

The coating amount of the surface-treating component on the surface of the respective particles of the cathode active material was determined by measuring amounts of Li, Ni, Co and Mn using a fluorescent X-ray spectroscopy device "3063 M-type" (manufactured by RIGAKU DENKI KOGYO CO., LTD.) according to JIS K0119 "General rule of fluorescent X-ray analysis".

The desorption percentage of the surface-treating component coated on the surface of the respective particles of the cathode active material was determined by the following method. The closer to zero the desorption percentage, the less the amount of the surface-treating component desorbed from the surface of the respective particles became.

5 g of the cathode active material and 50 mL of an electrolyte solution prepared by mixing 1 mol/L of $LiPF_6$ as an electrolyte in a mixed solution containing ethylene carbonate and diethyl carbonate at a volume ratio of 50:50 were charged into a 100 mL conical flask, and subjected to ultrasonic dispersion for 20 min using an ultrasonic disperser "SONOQUICK C10" manufactured by Ultrasonic Industry Co., Ltd. Thereafter, the resultant mixture was subjected to centrifugal separation at 10000 rpm for 15 min, thereby separating the mixture into a supernatant and a solid component.

The thus obtained solid component and 50 mL of the above electrolyte solution were charged into a 100 mL conical flask, and subjected to the same procedure as conducted above, total three times.

After the resultant solid component was dried at 100°C for 1 hr, the content of the surface-treating component in the obtained cathode active material was measured using a fluorescent X-ray spectroscopy device "3063 M-type" (manufactured by RIGAKU DENKI KOGYO CO., LTD.). The desorption percentage of the surface-treating component was calculated according to the following formula.

$$\texttt{Desorption percentage of surface-treating component}$$

$$\texttt{(\%) = \{(Wa -We)/Wa\} x 100}$$

wherein Wa represents a coating amount of the surface-treating component on the cathode active material before the desorption test; and We represents a coating amount of the surface-treating component on the cathode active material after the desorption test.

The number of the small particles being present on the core particles of the cathode active material was determined by counting the number of the small particles present on the surface of the respective core particles of about 50 composite particles observed on an enlarged photograph obtained by magnifying an electron micrograph (x 1000) four times in each of the longitudinal and lateral directions.

Meanwhile, the particles having a particle diameter not more than 10% of the average particle diameter of the composite particles which were previously measured by the above method are regarded as the small particles.

Example 1: <production of composite cathode active material for a non-aqueous electrolyte secondary cell>

10.0 kg of lithium cobaltate (particle shape: amorphous; average particle diameter: 16.9 $\mu$m; BET specific surface area: 0.5 m$^2$/g) was charged into an edge runner "MPUV-2 Model" (product name) manufactured by Matsumoto Chuzo Tekkosho Co., Ltd., and mixed and stirred therein at 294 N/cm (30 kg/cm) for 30 min to lightly deaggregate agglomerated particles.

Next, 500 g of zirconium oxide (particle shape: amorphous; average particle diameter: 0.3 $\mu$m; BET specific surface area: 15.8 m$^2$/g) was added to the lithium cobaltate particles while operating the edge runner, and mixed and stirred therewith at a linear load of 392 N/cm (40 kg/cm) for 40 min. Meanwhile, the stirring speed used upon the mixing was 22 rpm.

Next, 400 g of the obtained lithium cobaltate particles coated with the surface-treating component were charged into a high-speed shearing mill and subjected to high-speed shearing treatment at a rotating speed of 3050 rpm for 60 min. As a result, it was confirmed that the obtained surface-treated lithium cobaltate particles had an average particle diameter of 17.2 $\mu$m and a BET specific surface area value of 0.47 m$^2$/g; a desorption percentage of the surface-treating component from the lithium cobaltate particles was 0%; and the number of the small particles present on the surface of the respective core particles was 0.

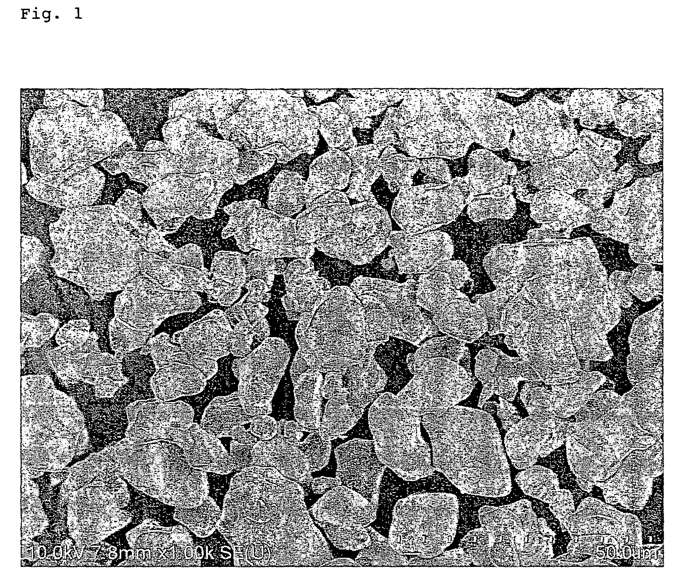

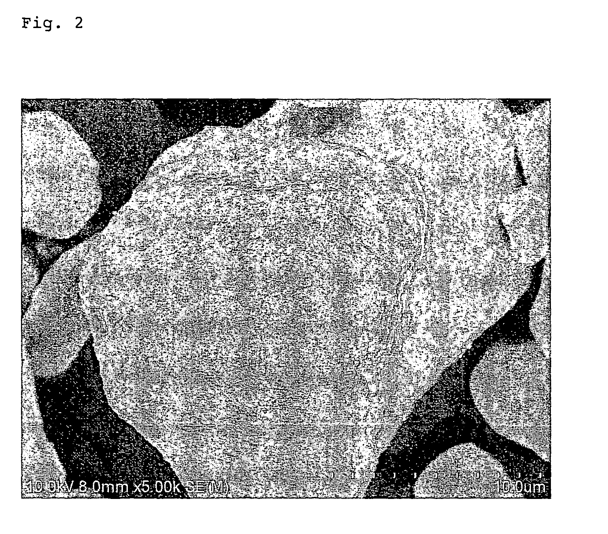

The electron micrographs of the thus obtained particles are shown in Fig. 1 and Fig. 2 (magnified). As shown in Fig. 1 and Fig. 2, it was confirmed that the surface-treating component is uniformly coated on the core particles and the resultant particles exhibited a uniform surface condition without any small particles present on the surface of the respective core particles.

Thus, the composite cathode active material for a non-aqueous electrolyte secondary cell was produced according to the method as described above.

Core particles 1 to 3:

Cathode active materials having properties as shown in Table 1 below were prepared as the core particles.

Table 1

| Core particles | Kinds and properties of core particles | | | |
|---|---|---|---|---|
| | Kind | Particle shape | Average particle diameter ($\mu$m) | BET specific surface area (m$^2$/g) |
| Core particles 1 | Lithium cobaltate | Amorphous | 16.90 | 0.5 |
| Core particles 2 | Lithium manganate | Amorphous | 5.10 | 1.2 |
| Core particles 3 | Lithium nickelate | Spherical | 12.20 | 0.32 |

Examples 2 to 4 and Comparative Examples 1 and 2:

The same procedure as defined in Example 1 was conducted except that kinds of the core particles, kinds and amounts of the surface-treating components added, treating conditions of the edge runner, and treating conditions of the apparatus capable of effecting a high-speed shearing action were variously changed, thereby obtaining composite cathode active materials for a non-aqueous electrolyte secondary cell.

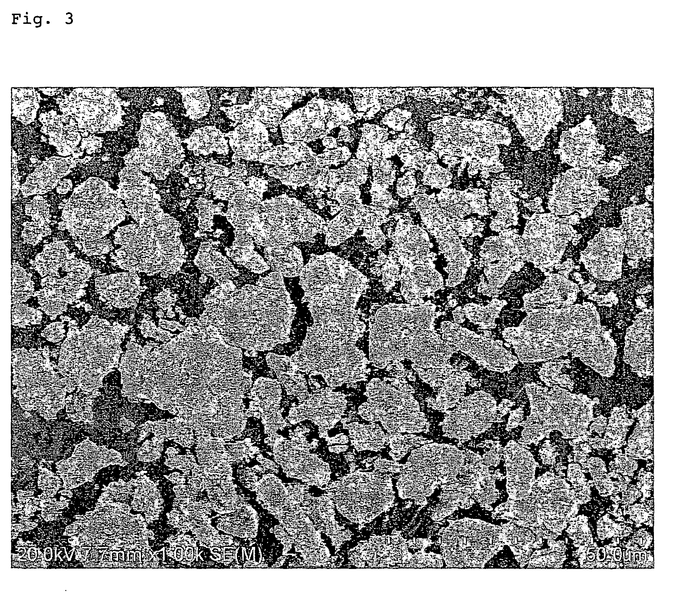

Essential production conditions used above are shown in Table 2, and various properties of the obtained composite cathode active materials for a non-aqueous electrolyte secondary cell are shown in Table 3. In addition, the electron micrograph of the particles obtained in Comparative Example 1 is shown in Fig. 3. As shown in Fig. 3, it was confirmed that a large number of small particles were present on the surface of the respective core particles, so that the obtained particles failed to exhibit a uniform surface condition.

## Table 2

| Examples and Comp. Examples | Kinds of core particles | Coating step with surface-treating component | | | |
|---|---|---|---|---|---|
| | | Surface-treating component | | | |
| | | Kind | Average particle diameter ($\mu$m) | BET specific surface area ($m^2/g$) | Amount added (wt part) |
| Example 1 | Core particles 1 | Zirconium oxide | 0.3 | 15.8 | 5.0 |
| Example 2 | Core particles 2 | Zirconium oxide | 0.3 | 15.8 | 3.0 |
| Example 3 | Core particles 3 | Zirconium oxide | 0.3 | 15.8 | 4.0 |
| Example 4 | Core particles 1 | Titanium oxide | 0.05 | 45.0 | 10.0 |
| Comp. Example 1 | Core particles 1 | Zirconium oxide | 0.3 | 15.8 | 5.0 |
| Comp. Example 2 | Core particles 1 | Titanium oxide | 0.05 | 45.0 | 10.0 |

## Table 2 (continued)

| Examples and Comp. Examples | Coating step with surface-treating component | | | | |
|---|---|---|---|---|---|
| | Spatula stroking | | | High-speed shearing treatment | |
| | Linear load | | Time (min) | Rotating speed | Time |
| | (N/cm) | (kg/cm) | | (rpm) | (min) |
| Example 1 | 392 | 40.0 | 40 | 3050 | 60.0 |
| Example 2 | 392 | 40.0 | 30 | 2100 | 40.0 |
| Example 3 | 588 | 60.0 | 40 | 4200 | 25.0 |
| Example 4 | 441 | 45.0 | 60 | 3100 | 90.0 |
| Comp. Example 1 | 392 | 40.0 | 50 | - | - |
| Comp. Example 2 | - | - | - | 3100 | 90.0 |

Table 3

| Examples and Comp. Examples | Properties of cathode active material | | | | |
|---|---|---|---|---|---|
| | Average particle diameter ($\mu$m) | BET specific surface area ($m^2$/g) | Coating amount (wt%) | Desorption percentage (%) | Number of small particles on surface of core particles (-) |
| Example 1 | 17.2 | 0.47 | 5.10 | 0 | 0 |
| Example 2 | 5.3 | 1.0 | 3.10 | 2 | 1 |
| Example 3 | 12.6 | 0.29 | 4.00 | 3 | 2 |
| Example 4 | 17.1 | 0.49 | 10.10 | 2 | 3 |
| Comp. Example 1 | 16.9 | 1.56 | 5.20 | 72 | 61 |
| Comp. Example 2 | 17.0 | 4.99 | 10.00 | 35 | 48 |

Thus, the composite cathode active material for a non-aqueous electrolyte secondary cell according to the present invention can maintain an initial discharge capacity required for a secondary cell, and the non-aqueous electrolyte secondary cell produced by using the composite cathode active material can be improved in high-temperature characteristics. Therefore, the process of the present invention is suitable as a process for producing a composite cathode active material for a non-aqueous electrolyte secondary cell.

Although the present invention is described in more detail by referring to the above Examples, as a matter of course, it is intended that the definitions of numerical ranges of the present invention involve all of numerical ranges including the optional numerical values used as critical values in the above Examples unless they depart from the scope of the present invention, and it should be construed that these numerical ranges are described in the present specification.

## Claims

1. A process for producing a composite cathode active material for a non-aqueous electrolyte secondary cell which is subjected to surface treatment, comprising:

   (a) mixing a cathode active material with a surface-treating component in the form of a metal compound containing one or more metal elements selected from the first transition series elements and the second transition series elements; and
   (b) then coating the cathode active material with the surface-treating component using an apparatus capable of effecting a high-speed shearing action.

2. A process according to claim 1, wherein the cathode active material is at least one material selected from lithium-transition metal composite oxides.

3. A process according to claim 2, wherein the cathode active material comprises particles having an average particle diameter of from 1.5 to 20$\mu$m and a BET specific surface area of from 0.08 to 8 $m^2$/g.

4. A process according to any one of the preceding claims, wherein the surface-treating component is an oxide or a hydroxide of one or more metal elements selected from the group consisting of the first transition series elements and the second transition series elements.

5. A process according to any one of the preceding claims, wherein the surface-treating component comprises particles having an average particle diameter of from 0.02 to 3.0$\mu$m and a BET specific surface area of from 1.0 to 60 $m^2$/g

6. A process according to any one of the preceding claims, wherein the surface-treating component is provided in step (a) in an amount of from 0.1 to 50 parts by weight per 100 parts by weight of the cathode active material.

7. A process according to any one of the preceding claims, wherein step (a) is conducted by means of a wheel-type kneader, a ball-type kneader, a blade-type kneader or a roll-type kneader.

8. A process according to claim 7, wherein a wheel-type kneader is used selected from an edge runner, multimill, Stotz mill, Wet pan mill and ring muller.

9. A process according to any one of the preceding claims, wherein a linear load of from 19.6 to 1960 N/cm is applied in step (a) for a time of from 5 to 120 minutes.

10. A process according to any one of the preceding claims, wherein the stirring speed in step (a) is from 10 to 800 rpm and the stirring speed in step (b) is from 2100 to 30000 rpm.

11. A process according to any one of the preceding claims, wherein step (b) is conducted by means of a shearing mill, blade-type kneader or planetary mill.

12. A process according to any one of the preceding claims, wherein step (b) is carried out for from 1 to 180 minutes.

13. A composite cathode active material for a non-aqueous electrolyte secondary cell which is obtainable by a process as defined in any of the preceding claims.

14. A composite cathode active material according to claim 13, which has a BET specific surface area of 0.05 to 10 $m^2$/g.

15. A non-aqueous electrolyte secondary cell having a cathode comprising the composite cathode active material for a non-aqueous electrolyte secondary cell as defined in claim 13 or 14.

Fig. 1

Fig. 2

Fig. 3

20.0kV 7.7mm x1.00k SE(M) 50.0um

Europäisches
Patentamt
European
Patent Office
Office européen
des brevets

## EUROPEAN SEARCH REPORT

Application Number

EP 08 25 2331

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/201948 A1 (HOSOYA YOSUKE [JP] ET AL) 14 October 2004 (2004-10-14) <br> * abstract * <br> * paragraph [0030] * <br> * paragraph [0033] * <br> * paragraph [0050] - paragraph [0055] * <br> ----- | 1,2,4, 6-13,15 | INV. <br> H01M4/52 <br> H01M4/62 <br> H01M4/66 <br> H01M10/40 |
| X | US 2004/137325 A1 (SUHARA MANABU [JP] ET AL) 15 July 2004 (2004-07-15) <br> * abstract * <br> * paragraph [0016] * <br> * paragraph [0021] * <br> * paragraph [0038]; example 1 * <br> ----- | 1-7,13, 15 | |
| X | EP 1 372 202 A (YUASA BATTERY CO LTD [JP]) 17 December 2003 (2003-12-17) <br> * abstract * <br> * paragraph [0091] * <br> * paragraph [0095] * <br> * paragraph [0101] * <br> ----- | 1,2,6,7, 13-15 | |
| A | US 5 869 208 A (MIYASAKA TSUTOMU [JP]) 9 February 1999 (1999-02-09) <br> ----- | 1-15 | TECHNICAL FIELDS SEARCHED (IPC) <br><br> H01M |
| A | US 5 665 491 A (TOMIYAMA HIDEKI [JP] ET AL) 9 September 1997 (1997-09-09) <br> ----- | 1-15 | |

The present search report has been drawn up for all claims

| Place of search | Date of completion of the search | Examiner |
|---|---|---|
| Munich | 15 December 2008 | Martín Fernández, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 25 2331

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2008

| Patent document cited in search report | | Publication date | Patent family member(s) | | Publication date |
|---|---|---|---|---|---|
| US 2004201948 | A1 | 14-10-2004 | CN | 1571194 A | 26-01-2005 |
| | | | JP | 4061648 B2 | 19-03-2008 |
| | | | JP | 2004319105 A | 11-11-2004 |
| | | | KR | 20040089545 A | 21-10-2004 |
| | | | TW | 240447 B | 21-09-2005 |
| US 2004137325 | A1 | 15-07-2004 | US | 2007111097 A1 | 17-05-2007 |
| EP 1372202 | A | 17-12-2003 | WO | 02073718 A1 | 19-09-2002 |
| | | | TW | 560098 B | 01-11-2003 |
| US 5869208 | A | 09-02-1999 | JP | 9245836 A | 19-09-1997 |
| US 5665491 | A | 09-09-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8236114 A
- JP 11016566 A
- JP 2003221234 A